**Europäisches Patentamt**

(19) **European Patent Office**

**Office européen des brevets**

(11) Veröffentlichungsnummer: **0 098 393**
**B1**

(12) **EUROPÄISCHE PATENTSCHRIFT**

(45) Veröffentlichungstag der Patentschrift:
14.01.87

(51) Int. Cl.⁴: **A 01 B 35/24, A 01 B 23/02**

(21) Anmeldenummer: 83105570.2

(22) Anmeldetag: 07.06.83

(54) Von einem Schlepper ziehbare Anordnung von Hacken.

(30) Priorität: 03.07.82 DE 8219144 U

(43) Veröffentlichungstag der Anmeldung:
18.01.84 Patentblatt 84/3

(45) Bekanntmachung des Hinweises auf die Patenterteilung:
14.01.87 Patentblatt 87/3

(84) Benannte Vertragsstaaten:
AT BE CH DE FR LI NL

(56) Entgegenhaltungen:
DE-B-2 352 262
DE-U-8 219 144
DK-C-39 371
DK-C-40 509
US-A-2 947 371

(73) Patentinhaber: SCHMOTZER AGRARTECHNIC
GmbH, Rothenburger Strasse 45, D-8532 Bad
Windsheim (DE)

(72) Erfinder: Nagel, Kurt, Paul- Gerhardt- Weg 4,
D-8532 Bad Windsheim (DE)

(74) Vertreter: Richter, Bernhard, Dipl.- Ing.,
Beethovenstrasse 10, D-8500 Nürnberg 20 (DE)

## Beschreibung

Die Erfindung betrifft eine von einem Schlepper ziehbare Anordnung von Hacken gemäß dem Oberbegriff des Anspruches 1. Hierzu kennt man Hacken, die aus einem in sich federnden, etwa S-förmig gebogenen Federband bestehen. Ein Ende dieses Federbandes ist am Träger befestigt und am anderen Ende des Federbandes ist das Hackwerkzeug z. B. eine dreieckförmige, geschärfte Messerplatte angebracht, das durch den Erdboden gezogen wird und das Unkraut durch Abschneiden vernichtet, sowie die Ackerbodenoberfläche lockert. Am Träger, in der Regel einer sich in Horizontalrichtung erstreckenden Schiene, ist zum einen sin auf dem Erdboden laufendes Stützrad befestigt. Zum anderen wird der Träger von einem Parallelogrammgestänge gehalten, welches entsprechend dem Lauf und der Bewegung des Stützrades mit dem Träger und den Hacken auf- und abschwingt. Das Parallelogrammgestänge ist. z. B. über ein weiteres Gestänge, am Schlepper anbringbar. Außer dieser, ersten bekannten Ausführungsform kennt man Hackanordnungen, bei denen jedes Hackwerkzeug sich an einem starren Stiel befindet der höhenverstellbar, aber starr an einer parallelogrammartigen Aufhängung des Schleppers angebracht ist. Hierbei ist es zwar möglich, durch eine Längenveränderung der Schlepperanhängung den Schnittwinkel der Hackwerkzeuge (Messerplatten) zu verändern und die sich hierdurch einstellenden Höhenänderungen der Hackwerkzeuge aufgrund der Höhenverstellbarkeit der starren Stiele zum Träger auszugleichen. Nachteilig ist jedoch, daß sich an den starren Hacken nicht verrottete Rückstände vorangegangener Anpflanzungen anhängen und daß sich deren Hackwerkzeuge beim Anfahren an größere Steine verbiegen. Beides führt zu einer schlechten Hackarbeit. Diese Nachteile der zuletzt beschriebenen zweiten Ausführungsform sind zwar bei der zuerst beschriebenen Ausführungsform mit in sich federnden Hacken vermieden. Ein wesentlicher Nachteil der in sich federnden Hacken ist aber die stets gleichbleibende Höhenlage der Hackwerkzeuge zum Träger. Soll, z. B. durch Verstellung des das Parallelogramm mit dem Schlepper verbindenden Gestänges, die Winkellage der Hackwerkzeuge zum Erdboden verändert werden, so ist dies zwar möglich, jedoch hat dies bei solchen in sich federnden Hacken zur Folge, daß z. B. das vordere Hackwerkzeug zu tief, das rückwärtige Hackwerkzeug dagegen ungenügend tief im Boden ist, u. U. sogar aus diesem herausragt; bzw. umgekehrt. Auch ist eine Höhenverstellung der Hackwerkzeuge relativ zum Träger und damit zum Stützrad nicht möglich. Dies ist aber in vielen Fällen erforderlich.

Aus der DK-PS 39 371 kennt man eine Federzinke für Eggen, bestehend aus einem bogenförmigen federnden Teil und einem ebenfalls bogenförmigen nicht-federnden Teil, die in Richtung des Bogens zueinander verstellbar sind. Dies hat aber eine Veränderung der Winkellage der Messerspitze zur Folge.

Dies wirkt der nachstehend erläuterten Lösung der vorliegenden Erfindung entgegen. Die Verstellung erfolgt dort mit Hilfe einer hülsenförmigen Führung.

Aus der DK 40 509 ist es bekannt, einen die Hacke tragenden Teil zu einem federnden Teil einer entsprechenden Eggenzinke in Horizontalrichtung zu verstellen.

Beide vorgenannten Patentschriften erfüllen nicht die Merkmale des Oberbegriffes des Anspruches 1 und befassen sich ferner nicht mit der Aufgabenstellung der vorliegenden Erfindung, so daß sie auch nicht die hierdurch gegebene Merkmalskombination und die dadurch erreichten Vorteile zeigen.

Die Aufgabe der Erfindung besteht demgegenüber darin, unter Beibehaltung der Vorteile der in sich federnden Hacken zu erreichen, daß bei einer Anordnung gemäß dem Oberbegriff des Anspruches 1 mit mehreren in Fahrtrichtung zueinander versetzten Hacken dieser Art bei einer Änderung des Schnittwinkels aller Hackwerkzeuge zum Boden zu erreichen, daß trotzdem all diese Hackwerkzeuge die gleiche Höhenlage und damit Eindringtiefe in den Erdboden haben.

Zur Lösung dieser Aufgabe dienen, ausgehend vom Oberbegriff des Anspruches 1 die Merkmale des Kennzeichens des Anspruches 1. Einerseits ist dabei jede Hacke federnd, erzielt also die mit der Federung solcher Hacken erläuterten Vorteile. Andererseits ist es aber durch die Höhenverstellbarkeit des starren Teiles zum federnden Teil möglich, bei einer Veränderung der Schnittwinkellage aller Hacken sämtliche starren Teile mit ihren Hackwerkzeugen so zu den dazugehörigen federnden Teilen in der Höhenlage einzustellen, daß alle Hackwerkzeuge die gleiche Eindringtiefe besitzen. Es wirken also die Merkmale des Oberbegriffes mit den Merkmalen des Kennzeichens des Anspruches 1 zur Lösung der genannten Aufgabe zusammen. Sofern eine Veränderung der Höhenlage der Hackwerkzeuge zum Stützrad, z. B. bei einer Änderung der Stützradhöhe zum Träger gewünscht wird, ist dies ebenfalls möglich. Auch sind somit die starren Teile mit den Hackwerkzeugen (Messern) gegenüber den federnden Teilen auswechselbar, und zwar entweder durch neue Werkzeuge gleicher Bauart, oder aber durch Werkzeuge anderer Bauart ersetzbar. Die vorgenannten Einstellungen, bzw. Auswechslungen sind rasch durchführbar. Eine diesbezügliche, bevorzugte Ausführungsform ist Inhalt des Anspruches 2.

Die Aufteilung der Hacke in einen federnden und in einen dazu verstellbaren starren Teil mit Hackwerkzeug ermöglicht ferner die Merkmale des Anspruches 3. Hierdurch wird die effektive Federlänge, nämlich Abstand zwischen der Anbringung der Feder am Träger und der Anbringstelle des starren Teiles am federnden Teil verändert. Dies hat eine entsprechende Veränderung der Schwingungsfrequenz der Hacke zur Folge. Dies ist für die Anpassung der Hackanordnung an Böden unterschiedlicher Schwere, bzw. Zähigkeit von Vorteil.

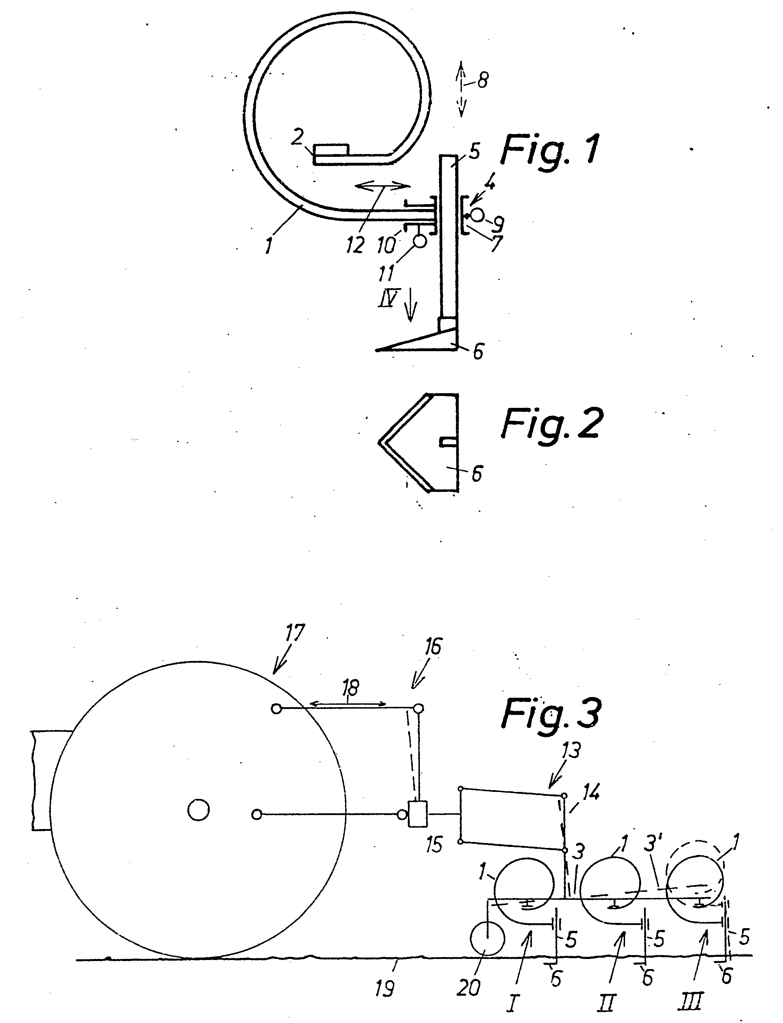

Weitere Vorteile und Merkmale der Erfindung sind der nachstehenden Beschreibung und der zugehörigen Zeichnung von erfindungsgemäßen Ausführungsmöglichkeiten zu entnehmen. In der Zeichnung zeigt: Figur 1: eine Hacke in der Seitenansicht, Figur 2: eine Draufsicht auf das Hackwerkzeug gemäß dem Pfeil IV in Fig. 1, und Figur 3: eine Seitenansicht einer Anordnung von Hacken mit Zuggestänge und einem Teil des Schleppers.

Jede Hacke besteht aus einem in sich federnden Teil 1, der z. B. spiralförmig und aus einem Federband sein kann und an seinem einen Ende 2 an einem Träger 3 (siehe Fig. 3) befestigt wird, während sein anderes Ende 4 den starren Teil 5 der Hacke trägt, der aus einem Stab oder Stiel 5 mit Werkzeug 6 besteht. Das in der Draufsicht in Fig. 2 ersichtliche Werkzeug hat die Form eines in Fahrtrichtung spitz zulaufenden Schneidmessers. Der Stab oder Stiel 5 ist in der hülsenförmigen Führung 7 des Endes 4 des federnden Teiles 1 in Pfeilrichtung 8 höhenverstellbar und in der jeweiligen Stellage durch eine nur angedeutete Verschraubung 9 oder dergleichen feststellbar. Ferner ist mit der waagerecht verlaufenden hülsenförmigen Führung 10 und einer Feststellschraube 11 die Möglichkeit angedeutet, den starren Hackteil 5 mit Werkzeug 6 in Pfeilrichtung 12, d. h. etwa in Horizontalrichtung relativ zum federnden Teil 1 verschieben und in der gewünschten Stellage fixieren zu können.

Fig. 3 zeigt mehrere, drei Hacken I, II und III, die jeweils aus einem federnden Teil 1 und einem starren Teil 5 mit Werkzeug 6 bestehen und in Fahrtrichtung zueinander versetzt am Träger 3 angebracht sind. Dieser gemeinsame Träger 3, z. B. eine Schiene, ist in der Zeichnung nur angedeutet. Im übrigen ist die Ausbildung der Hacken wie in Fig. 1, 2 dargestellt und beschrieben. Am Träger 3 ist ferner ein Parallelogrammgestänge 13 befestigt (siehe Ziff. 14), das gemäß Ziff. 15 an einem Verstellgestänge 16 angehängt ist, das seinerseits an dem mit 17 nur angedeuteten Schlepper angehängt ist. Durch Verstellung der Länge der Strebe 18 des Gestänges 16 kann, wie an einigen Stellen gestrichelt angedeutet, die Winkellage der Hackenanordnung gemäß Fig. 3 verändert werden. Der Träger nimmt dann die gestrichelt eingezeichnete Winkellage 3' ein. Um die Übersichtlichkeit der Zeichnung nicht zu beeinträchtigen, ist die entsprechende Position der Hacken I bis III nicht gestrichelt eingezeichnet. Es ist aber ersichtlich, daß sich damit auch die Winkellage der Hackmesser 6 zur Erdoberfläche 19 entsprechend verändert (dies wird auch durch die vorstehend erläuterte Winkellagenänderung angestrebt). Nur hat dies an sich zur Folge, daß dann die hintere Hacke III mehr angehoben ist als die vorderen Hacken I und II, so daß im Extremfall die hintere Hacke III mit ihrem Werkzeug 6 garnicht mehr in den Erdboden eindringt. Durch die Vertikalverstellung des starren Teiles 5 zum federnden Teil 1 können nun diese Höhenänderungen ausgeglichen werden. Ebenso ist hiermit eine generelle Änderung der Eindringtiefe der Werkzeuge 6 möglich.

Die erläuterte Horizontalverstellung des starren Teiles zum federnden Teil dient der Änderung der Eigenfrequenz des federnden Teiles und der Anpassung der Hackwerkzeuge an unterschiedliche Bodenverhältnisse.

**Patentansprüche**

1. Von einem Schlepper ziehbare Anordnung von Hacken, die jeweils ein Hackwerkzeug aufweisen und, in Fahrtrichtung versetzt, an einem Träger angebracht sind, der über ein in Vertikalrichtung nachgiebiges Parallelogrammgestänge am Schlepper anbringbar ist, wobei die Winkellage der aus den einzelnen federnden Hacken bestehenden Anordnung zum Erdboden durch entsprechende Verstellung der Winkellage des Trägers zum Erdboden veränderbar ist (Schnittwinkelverstellung), dadurch gekennzeichnet, daß jede Hacke (I, II, III) aus einem das Hackwerkzeug (6) tragenden starren Teil (5) und einem weiteren, federnden Teil (1) besteht, wobei der starre Teil am federnden Teil entlang einer geraden Linie höhenverstellbar angebracht ist und der federnde Teil am Träger (3) befestigt ist.

2. Anordnung nach Anspruch 1, dadurch gekennzeichnet, daß der starre Teil (5) stab- oder stielförmig ausgebildet ist und in einer hülsenförmigen Führung (7) des federnden Teiles (1) verschiebbar, sowie darin durch eine Klemmschraube (9) oder dergleichen in der jeweiligen Stellage fixierbar ist.

3. Anordnung nach Anspruch 1 oder 2, dadurch gekennzeichnet, daß der starre Teil (5) zum federnden Teil (1) etwa in der Horizontalrichtung verstellbar und in der jeweiligen Stellage fixierbar ist.

**Claims**

1. Arrangement, towable by a tractor, of hoes which each display a respective hoeing tool and ars mounted - displaced in direction of travel - at a carrier which is mountable at the tractor by way of a parallalogram linkage yielding in vertical direction, wherein the angular position of the arrangement consisting of the individual resilient hoes relative to the soil is variable through corresponding adjustment of the angular position of the carrier relative to the soil (adjustment of cutting angle), characterised thereby, that each hoe (I, II, III) consists of a rigid part (5) carrying the hoeing tool (6) and a further resilient part (1), wherein the rigid part mounted at the resilient part to be adjuatable in height along a straight line and the reailient part is fastened at the carrier (3)

2. Arrangement according to claim 1, characterised thereby, that the rigid part (5) is constructed to be rod-shaped or post-shaped and is displaceable in a sleeve-shaped guide (7) of the resilient part (1) as well as fixable therein in ths respectively set position by a clamping screw (9) or the like.

3. Arrangement according to claim 1 or 2, characterised thereby, that the rigid part (5) is adjustable relative to the resilient part (1) in about the horizontal direction and fixable in the respectively set position.

## Revendications

1. Disposition d'outils de binage traînés par un tracteur, et comportant chacun un outil fixé sur un porteoutil de manière vibrante qui peut être monté sur le tracteur au moyen d'un parallélogramme cédant en direction verticale, caractérisée en ce que chaque outil de binage (I, II, III) se compose d'une partie de support rigide (5) et d'une partie vibrante (1), la partie rigide étant montée sur la partie vibrante réglable en hauteur et la partie vibrante étant fixée sur le porte-outil.

2. Disposition d'outils de binage selon la revendication 1, caractérisée en ce que la partie rigide (5) est en forme de bâton ou de manche et est déplaçable dans un guide en forme de manchon de la partie vibrante (1), et peut être fixée au moyen d'une vis (9), ou analogue, dans la position voulue.

3. Disposition d'outils de binage selon la revendication 1 ou 2 caractérisée en ce que la partie rigide (5) est réglable en direction horizontale par rapport à la partie vibrante et peut être fixée dans la position voulue.

*Fig. 1*

*Fig.2*

*Fig.3*